# EUROPEAN PATENT APPLICATION

(11) **EP 1 559 353 A1**
(43) Date of publication of application: **03.08.2005**
(21) Application number: 04425057.9
(22) Date of filing: 30.01.2004
(51) Int. Cl.: A47J 36/02, A47J 27/00

(54) **Method for making a unit for cooking foods and food cooking unit**

(71) Applicant: Tutto S.p.A., 20090 Buccinasco (Milano) (IT)
(72) Inventor: Morando, Mauro, 20090 Cusago Milano (IT)
(74) Representative: Ghioni, Carlo Raoul Maria

(57) **Abstract**

A method of making a unit for cooking foods comprising, the steps of preparing a metal vessel (2) having a bottom portion (2a) and applying a multi-layered covering (3) to the bottom portion (2a) of the vessel (2). The method further comprises the steps of producing a copper box-shaped element (4) having a base disc (5) and a border (6) defining a first housing cavity (7) and at least.one second housing cavity (8) opposite to the first one; inserting a first aluminium plate (12) into the second housing cavity (8); inserting a steel plate (11) into the second housing cavity (8); inserting a second aluminium plate (13) into the first housing cavity (7); inserting the bottom portion (2a) of the vessel (2) at least partly into the first housing cavity (7); heating the multi-layered covering (3) and at least the bottom (2a) of the vessel (2) and applying a pressure to the multi-layered covering (3) and the bottom (2a) to join them together in a permanent manner. A food-cooking unit formed as set out above.

## Description

The present invention relates to a method of making a unit for cooking foods and to a food-cooking unit, in particular with a multi-layered cooking bottom.

Known in this technical field is how to make pots and vessels for cooking foods in general having a multi-layered cooking bottom. This particular configuration originates from the requirement of simultaneously obtaining a good heat diffusion within the pot bottom and a good resistance of the bottom to oxidizing agents.

In fact, in order to uniformly cook foods, the bottom surface of the pot is required to be able to ensure an almost uniform temperature at all points thereof.

In addition, to allow quick cooking of the foods, heat must be transmitted quickly from the pot bottom to the foods to be cooked.

Finally, it is important for the materials of which the multi-layered bottoms are made not to oxidize with ease, in order both not to alter the heat transmission capability of the bottom itself and to avoid formation of stains and encrustations resulting in unpleasant visual effects. Said stains and encrustations are still more unpleasant and detrimental when they are present on the pot surfaces with which the food will come into contact.

In the multi-layered pots of the known art the above mentioned requirements are reconciled by proposing a bottom including a first plate of stainless steel designed to come into contact with the heat source, a second plate of stainless steel consisting of the cooking bottom and an aluminium plate interposed between the steel plates.

In addition, instead of a single aluminium plate, two aluminium plates separated by a further steel plate may be provided.

Aluminium has a dual function: it allows a uniform diffusion of heat from the steel plate in contact with the heat source and a steady union of the steel plates with each other.

Union between the bottom components is obtained by heating all the plates and applying a suitable pressure to the whole stack. In this manner, since aluminium is brought to a temperature very close to the melting temperature and is submitted to a pressure of some ten thousands Pa, it binds with steel in an indissoluble manner, steel being maintained to a temperature greatly far from the melting one.

The Applicant has found that the pots of the known art having a multi-layered bottom can be improved under different points of view,

In fact, while aluminium is a good heat conductor, it does not allow a quick heat transmission from the heat source to the foods contained in the pot.

This drawback is still more marked when an intermediate steel layer is present within the multi-layered bottom, since steel, as known, is a bad heat conductor.

In addition, in the production process for obtaining multi-layered pots in accordance with the known art, the plates constituting the pot bottom are to be piled up in a precise manner, which makes it indispensable to adopt particular devices or expedients for centring of the different elements constituting the multi-layered bottom and centring of the bottom itself with respect to the pot.

In this context, the main technical task of the present invention is to propose a method of making a unit for cooking foods and a food-cooking unit that allow the drawbacks of the known art to be eliminated.

In particular, the present invention aims at making available a method of producing a unit for cooking foods and a food-cooking unit that enable a more effective heat diffusion and transmission through the vessel bottom, as compared with the pots of the known art.

It is a further aim of the present invention to propose a method of making a unit for cooking foods in which use of particular devices or expedients are not required for centring of the cooking bottom on the vessel bottom.

The technical task mentioned and the aims specified are substantially achieved by a method of making a unit for cooking foods as well as a food-cooking unit comprising the technical features set out in the annexed independent claims.

Further features and advantages of the present invention will become more apparent from the description given by way of non-limiting example, of a preferred but not exclusive embodiment of a method of making a unit for cooking foods as well as of a food-cooking unit, as illustrated in the accompanying drawings, in which:

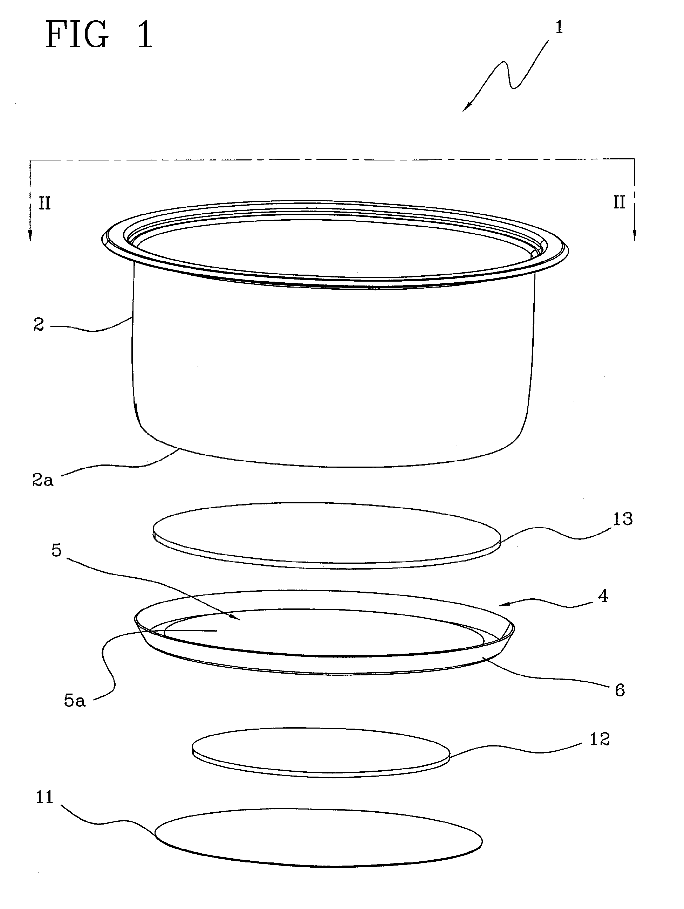

- Fig. 1 is an exploded view of a food-cooking unit in accordance with the invention;

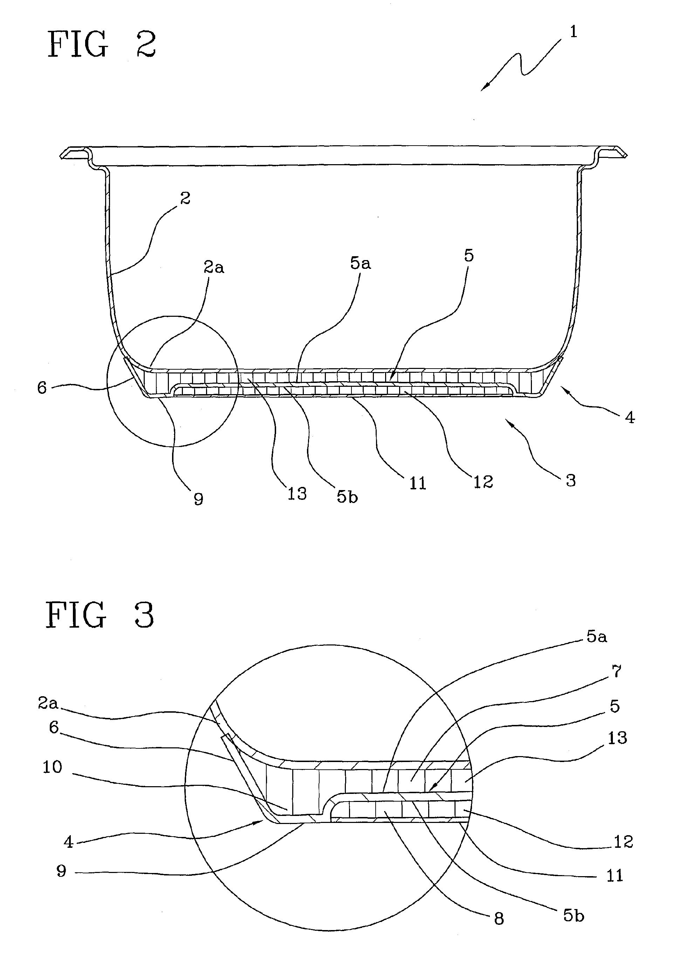

- Fig. 2 is a section taken along line II-II of the unit in Fig. 1 in an assembled condition;
- Fig. 3 is an enlarged view of a detail of the section in Fig. 2;

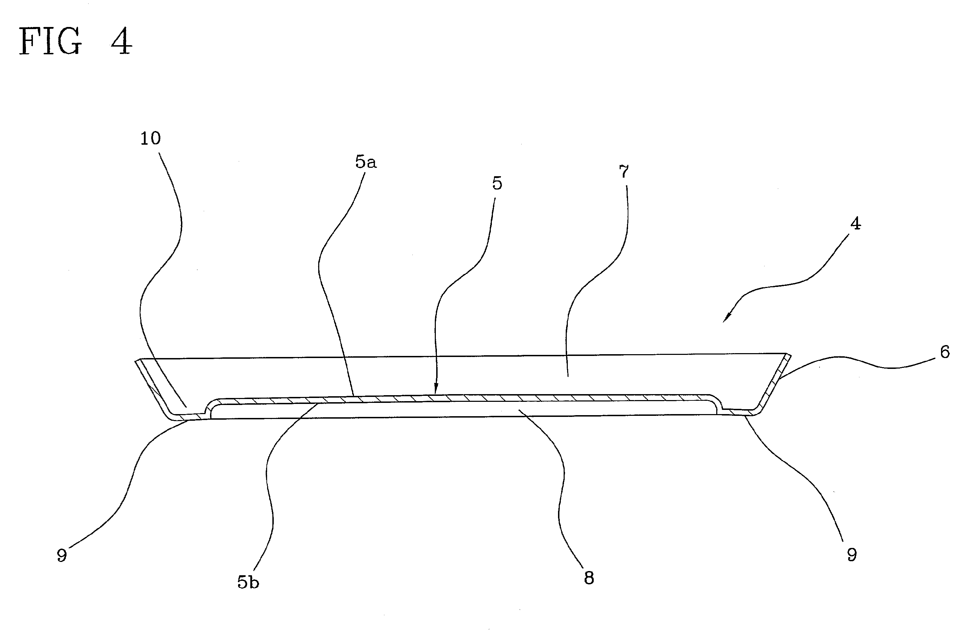

- Fig. 4 is a section view of a detail of the unit in Fig. 1.

With reference to the drawings, a food-cooking unit such as a pot is identified by reference numeral 1.

Unit 1 comprises a vessel 2 made of metal, preferably steel, and a multi-layered covering 3 applied to a bottom portion 2a of vessel 2. Clearly, the pot base, i.e. the bottom portion 2a, can be of a circular, oval, rectangular or any other shape depending on requirements.

The multi-layered covering 3 comprises a box-shaped element 4 of copper material having a base disc 5 and a border 6. The base disc 5 and border 6 define a first housing cavity extending from a first surface 5a of the base disc 5 and at least one second housing cavity 5b opposite to the first surface 5a of the base disc 5.

In addition, the copper box-shaped element 4 has at least one connecting portion 9 disposed between the border 6 and base disc 5. The connecting portion 9 defines at least one annular extension 10 of the first housing cavity 7.

Preferably, the connecting portion 9 has a substantially U-shaped profile and extends over at least 5 mm between the border 6 and base disc 5. Preferably, the connecting portion 9 extends over a distance included between 5 mm and 15 mm.

The multi-layered covering 3 further comprises a steel plate 11 of a thickness in the range of 0.4 mm to 1.2 mm, that is inserted in the second housing cavity 8, and a first aluminium plate 12 inserted in the second housing cavity 8 between the steel plate 11 and the second surface 5b of the base disc 5.

Preferably, the steel plate 11 is made of stainless steel and has a thickness of 0.8 mm.

The second housing cavity 8 has a depth of at least 3 mm to enable it to house both the first aluminium plate 12 and the steel plate 11 therein.

Inserted in the first housing cavity 7 is a second aluminium plate 13 and, at least partly, the bottom portion 2a of vessel 2.

The second aluminium plate 13 is interposed between the first surface 5a of the base disc 5 and the bottom portion 2a of vessel 2.

Advantageously, the border 6 of the box-shaped element 4 has a flared shape to allow easy insertion of the base 2a of vessel 2 into the first housing cavity 7.

In addition, the border 6 of the copper box-shaped element 4 extends from bottom 2a of vessel 2 to the steel plate 11 and is connected both to bottom 2a of vessel 2 and to the steel plate 11. By virtue of this configuration, when foods are being cooked, the periphery of bottom 2a of vessel 2 can be heated in almost the same manner as the remainder of bottom 2a. In fact, heat losses generated at the periphery of the multi-layered bottom 3 due to convection and radiation phenomena between the metal and the surrounding atmosphere, are compensated for by the greater thermal conduction coefficient of copper with respect to that calculated as the weighted average of all elements constituting the multi-layered bottom 3.

To ensure the maximum efficiency in terms of uniform transmission of heat from the steel plate 11 designed-to get into contact with the heat source to the bottom 2a of vessel 2, thickness of the first aluminium plate 12 must be included between 1.5 mm and 5 mm, and preferably must be of 2.5 mm. and also thickness of the second aluminium plate 13 must be in the order of 1.5 mm to 5 mm, preferably of 2.5 mm.

For the same reason, thickness of the copper material forming the box-shaped element 4 must be included between 4.4 mm and 1.2 mm, and preferably must be of 0.8 mm.

In accordance with the invention, also provided is a method of making the unit 1 for cooking foods. Following this method, manufacture of the copper box-shaped body completed with the base disc 5 and border 6 is provided beforehand. Preferably, the box-shaped body 4 is obtained by counter pressing of a copper plate on a die (not shown); however manufacture of same may take place by milling from a copper block or by hot or cold permanent set of a copper plate.

The base disc 5 and border 6 are such shaped as to define the first housing cavity 7 and the second housing cavity 8.

Subsequently, provision is made for the steps of inserting the aluminium plates 12 and 13 and the steel plate 11 into the housing cavities 7 and 8 defined in the box-shaped body 4. More specifically, the first aluminium plate 12 is inserted into the second housing cavity 8 of the copper box-shaped element. 4, in contact with the second surface 5b of the base disc 5. At this point, insertion of the steel plate 11 into the second housing cavity 8. is carried out, this steel plate being brought into contact with the first aluminium plate 12.

The method also contemplates insertion of the second aluminium plate 13 into the first housing cavity 7 of the copper box-shaped element 4, by bringing it into contact with the first surface 5a of the base disc 5. In addition, the bottom portion 2a of vessel 2 is provided to be inserted at least partly into the first housing cavity 8.

It will be recognised that in the practical accomplishment of the above described method, assembling of the different components may be also carried out following a different step sequence. For example, first the second aluminium plate 13 and bottom 2a of vessel 2 and subsequently the first aluminium plate 12 and the steel plate 11 may be inserted into the box-shaped body 4. Alternatively, an alternate arrangement may be provided according to which first the first aluminium plate 12 and then the second aluminium plate 13 is inserted or vice versa, followed by positioning of the steel plate 11 and bottom 2a of vessel 2 or vice versa.

To permanently join the components of the multi-layered covering 3 and bottom 2a of vessel 2 with each other, it is ultimately provided, in accordance with the present method, to heat the multi-layered covering 3 and at least bottom 2a to a temperature included between 460°C and 500°C, and to apply a pressure generated by an impact force included between 13000 KN and 20000 KN to the multi-layered covering 3 and bottom 2a. By the above process aluminium plasticizes and fills all spaces present between the steel plate 11 and copper box-shaped element 4 and between bottom 2a of vessel 2 and the box-shaped element 4, thereby steadily linking the components of the multi-layered covering 3 and bottom 2a with each other.

Advantageously, by virtue of the annular extension 10 of the first housing cavity 7, during the pressing step the metal part constituting the second aluminium plate 13 that would tend to move over the first housing cavity 7 can be received therein.

In order to be sure that after the pressing step the average thicknesses of the aluminium plates remain within the specified interval, the first aluminium plate 12 has a starting thickness included between 1.8 mm and 5.3 mm, preferably of 2.8 mm, and also the second aluminium plate 13 has a starting thickness included between 1.8 mm and 5.3 mm, preferably of 2.8 mm.

The present invention achieves the intended purposes.

In fact, the copper box-shaped element allows a uniform distribution and quick transmission of heat within the multi-layered bottom because the heat-transmission coefficient of copper is about twice that of the metals used in multi-layered pots of the known art.

In addition, adoption of the box-shaped element with the specified shape allows all plates constituting the multi-layered bottom to be contained within said box-shaped element, without any particular device or expedient for centring the different layers of the multi-layered bottom and the cooking vessel being required.

The invention also allows achievement of important advantages.

In fact, use of a steel plate as the element designed to come into contact with the heat source allows ovens, stoves or hot plates of the magnetic induction type to be employed.

Furthermore, the first aluminium plate having a thickness included between 1.5 mm and 5 mm allows the heat flow to be made uniform before the same impinges on the copper box-shaped element, thus increasing the efficiency of the latter in terms of uniform and quick transmission of heat.

Finally, since the border of the copper box-shaped element extends between the vessel bottom and the steel plate directly in contact with the heat source, the heat-loss effects generated at the periphery of the multi-layered covering are eliminated or at least reduced, so that the temperature gradient close to the periphery of the pot bottom is greatly reduced.

## Claims

1. A method of making a unit for cooking foods comprising the steps of:
- preparing a metal vessel (2) having a bottom portion (2a) and
- applying a multi-layered covering (3) to the bottom portion (2a) of the vessel (2);
**characterized in that** the step of applying the multi-layered covering (3) comprises the steps of:
- producing a copper box-shaped element (4) having a base disc (5) and a border (6) defining a first housing cavity (7) and a second housing cavity (8) opposite to the first one and, subsequently, inserting a first aluminium plate (12) into said second housing cavity (8);
- inserting a steel plate (11) into said second housing cavity (8);
- inserting a second aluminium plate (13) in said first housing cavity (7);
- inserting the bottom portion (2a) of the vessel (2) at least partly into the first housing cavity (7);
- heating the multi-layered covering (3) and at least the bottom (2a) of the vessel (2); and
- applying a pressure to the multi-layered covering (3) and bottom (2a) to joint them together in a permanent manner.

2. A method as claimed in claim 1, wherein the step of producing the copper box-shaped element (4) comprises the step of counter-pressing a copper plate on a die.

3. A method as claimed in claim 1 or 2, wherein said second housing cavity (9) of the box-shaped element (4) has a depth of at least 3 mm.

4. A method as claimed in anyone of the preceding claims,
wherein the first aluminium plate (12) has a starting thickness included between 1.8 mm and 5.3 mm.

5. A method as claimed in anyone of the preceding claims,
wherein the second aluminium plate (13) has a starting thickness included between 1.8 mm and 5.3 mm.

6. A food-cooking unit comprising:
- a metal vessel (2) having a bottom portion (2a) and a multi-layered covering (3) placed on the bottom portion (2a) of the vessel (2);
**characterized in that** the multi-layered covering (3) comprises:
- a copper box-shaped element (4) having a base disc (5) and a border (6) defining a first housing cavity (7) and a second housing cavity (8) opposite to the first one;
- a steel plate (11) inserted in said second housing cavity (8);
- a first aluminium plate (12) inserted in said second housing cavity (8) between said steel plate (11) and base disc (5) of the box-shaped element;
- a second aluminium plate (13) inserted in said first housing cavity (7);
the bottom portion (2a) of the vessel (2) being at least partly inserted in the first housing cavity (7).

7. A cooking unit as claimed in claim 6, wherein said second housing cavity (8) has a depth of at least 3 mm.

8. A cooking unit as claimed in claim 6 or 7, wherein the copper box-shaped element (4) comprises at least one connecting portion (9) disposed between said border (6) and base disc (5) and defining at least one annular extension (10) of the first housing cavity (7).

9. A cooking unit as claimed in claim 8, wherein said connecting portion (9) extends between said base disc (6) and border (5) over at least 5 mm.

10. A cooking unit as claimed in anyone of claims 6 to 9, wherein the steel plate (11) is of a thickness included between 0.4 mm and 1.2 mm.

11. A cooking unit as claimed in anyone of claims 6 to 10, wherein the first aluminium plate (12) is of a thickness included between 1.5 mm and 5 mm.

12. A cooking unit as claimed in anyone of claims 6 to 11, wherein the second aluminium plate (13) is of a thickness included between 1.5 mm and 5 mm.
